# EUROPEAN PATENT SPECIFICATION

(11) **EP 3 086 395 B1**
(45) Date of publication and mention of the grant of the patent: **04.10.2017**
(21) Application number: 14872465.1
(22) Date of filing: 16.12.2014
(51) Int. Cl.: H01M 8/2475

(54) **POWER GENERATION SYSTEM**
STROMERZEUGUNGSSYSTEM
SYSTÈME DE GÉNÉRATION DE PUISSANCE

(30) Priority: 18.12.2013 JP 2013260920
(43) Date of publication of application: 26.10.2016
(73) Proprietor: Panasonic Intellectual Property Management Co., Ltd., Osaka-shi, Osaka 570-6207 (JP)
(72) Inventor: NAKAMURA, Takashi, Osaka-shi Osaka 540-6207 (JP); WAKAMATSU, Hidetoshi, Osaka-shi Osaka 540-6207 (JP)
(74) Representative: Grünecker Patent- und Rechtsanwälte PartG mbB
(86) International application number: PCT/JP2014/006254
(87) International publication number: WO 2015/093042

(56) References cited:
- EP-A2- 1 408 571
- WO-A1-2013/137448
- JP-A- 2002 044 852
- JP-A- 2011 244 580
- JP-A- 2013 191 324

## Description

### TECHNICAL FIELD

The present invention relates to a power generation system, particularly to a fuel cell system that generates power through a reaction of hydrogen with oxygen.

### BACKGROUND ART

A fuel cell system is provided with a fuel processor and a fuel cell. The fuel processor generates a fuel gas containing hydrogen through a steam-reforming reaction of a raw material (e.g., city gas and LP gas) supplied from an infrastructure. The fuel cell supplies a fuel gas containing hydrogen generated by the fuel processor to the anode and an oxidizer gas to the cathode to generate power through an electrochemical reaction.

As a housing of a fuel cell system including a fuel processor and a fuel cell for example, there is publicly known a housing that includes a base, an exterior panel standing on this base, and a top plate provided at the top end of the exterior panel (refer to PTLs 1 and 2, for example).

PTL 1 discloses a housing that has a rotary table mechanism at its bottom and has its panels openable and closable with hinges.

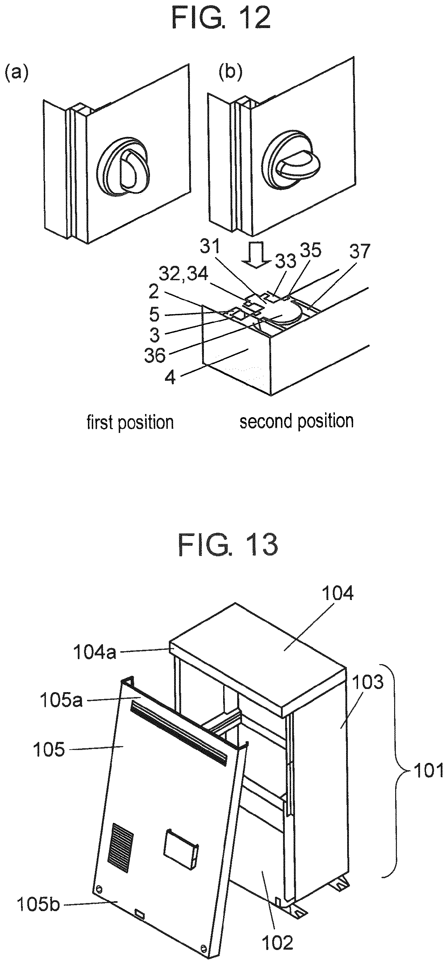

FIG. 13 is a perspective view illustrating the configuration of an existing fuel cell system described in PTL 2.

As shown in FIG. 13, PTL 2 discloses the housing of a fuel cell system that allows its front panel easily attachable to and detachable from the housing in spite of its relatively narrow installation space. Housing 101 of the fuel cell system includes base 102, exterior panel 103 standing on base 102, and top plate 104 provided at the top end of exterior panel 103. Front panel 105 composing exterior panel 103 has top end 105a inserted into the inside of end 104a of the top plate in an insertable and removable manner and has bottom end 105b fixed to base 102 in an attachable and detachable manner.

Meanwhile, a fuel cell system has been devised that is called a package-type fuel cell power generation apparatus (refer to PTL 3 for example). This apparatus is mainly for indoor installation. The package-type fuel cell power generation apparatus to be installed indoor requires an air intake duct for introducing air consumed for power generating operation and air for ventilation from the outdoor, a system discharge duct for discharging system exhaust, and a ventilation discharge duct for discharging ventilation exhaust inside the package. For safety reason, maintaining high airtightness between the inside and outside of the package is an essential requirement.

In the existing technology, however, although the installability and maintainability of the fuel cell system are taken into consideration, airtightness of the housing is not.

Especially in the fuel cell system of PTL 2, to achieve high airtightness of the housing, packing with sealability can be provided at a part where front panel 105 contacts housing 101 for example. Then, top end 105a of the front panel is inserted into the inside of end 104a of the top plate in an insertable and removable manner, and bottom end 105b is fixed to base 102 with some screws. In this case, the packing is usually compressed on the entire circumference of front panel 105 at a roughly constant level to provide high airtightness of the housing. Poor maintenance work (e.g., an insufficiently tightened screw), however, can prevent the packing from being compressed stably for high airtightness of the housing.

The airtightness performance of the housing of a forced flue fuel cell system for indoor installation is defined by European Norm (European Standards) as well. The fitting parts of the housing exterior are provided with packing, and the system is factory-shipped that surely has high airtightness. When a fuel cell system is installed or serviced, however, the exterior panel for maintenance is opened, often impairing airtightness. Actually, workers of installation or maintenance open and close the exterior panel, where even complete work can cause a human error if screws are tightened in an existing way. Thus, it is actually not easy to always achieve high airtightness.

### Citation List

### Patent Literature

PTL 1: Japanese Patent Unexamined Publication No. 2008-235092
PTL 2: Japanese Patent Unexamined Publication No. 2013-191324
PTL 3: Japanese Patent Unexamined Publication No. 2006-253020

### SUMMARY OF THE INVENTION

The present invention has been made in view of such an existing problem, and provides a power generation system that reliably provides high airtightness of the housing.

A power generation system of the present invention includes a power generation unit that generates power using a raw fuel and an oxidizer gas, a housing that has an opening and contains the power generation unit, a first lid disposed so as to cover the opening of the housing, and a second lid disposed so as to cover the first lid. The power generation system further includes a sealing part disposed between the first lid and the housing, a fixing structure that has a holding part and a first fitting part and is disposed on the first lid, and a second fitting part disposed on the housing or on the first lid. The fixing structure is configured so that, when disposing the second lid, the fixing structure is movable between a first position (a part where the first fitting part and the second fitting part are not fitted together, and the holding part and the second lid do not contact each other) and a second position (a part where the first fitting part and the second fitting part are fitted together and the holding part and the second lid do not contact each other).

With such a configuration, the first lid is attached on the housing and the first fitting part is made completely fit to compress the sealing part for airtightness between the first lid and the housing at a roughly constant level. Further, whether or not fitting work of the first fitting part has been surely completed can be checked when the second lid is attached, and thus a series of process allows providing high airtightness of the housing.

The squeeze amount of the sealing part interposed between the housing and the first lid can be maintained at a roughly constant level, and thus opening and closing the first lid for installation or maintenance does not impair the airtightness performance of the housing. Further, even in case of incomplete work of opening and closing the first lid, the two-piece structure of the first lid and the second lid can detect it and allows providing high airtightness of the housing after the work.

### BRIEF DESCRIPTION OF DRAWINGS

FIG. 1 illustrates the configuration of a fuel cell system according to the first exemplary embodiment of the present invention.
FIG. 2 illustrates the joint parts between the second and first lids and the housing according to the first embodiment.
FIG. 3 illustrates assembled appearance of the fuel cell system according to the first embodiment.
FIG. 4 illustrates the fuel cell system according to the first embodiment, with the second lid removed.
FIG. 5 illustrates the fuel cell system according to the first embodiment, with the second and first lids removed.
FIG. 6 illustrates how to fix the first lid using a fixing structure, of the fuel cell system according to the first embodiment.
FIG. 7 illustrates the fuel cell system according to the first embodiment, with the second and first lids fixed to the housing.
FIG. 8 is a perspective view illustrating how to attach the second lid, of the fuel cell system according to the first embodiment.
FIG. 9 is a perspective view of the fixing structure of a fuel cell system according to the second embodiment of the present invention.
FIG. 10 illustrates the fuel cell system according to the second embodiment, with its fixing structure at a first position and at a second position.
FIG. 11 illustrates the configuration of the fixing structure of a fuel cell system according to the third embodiment of the present invention.
FIG. 12 illustrates the fuel cell system according to the third embodiment, with its fixing structure at a first position and at a second position.
FIG. 13 is a perspective view illustrating the configuration of the existing fuel cell system described in PTL 2.

### DESCRIPTION OF EMBODIMENTS

Hereinafter, a description is made of some embodiments of the present invention with reference to the related drawings. The present invention is not limited by the embodiments.

### FIRST EXEMPLARY EMBODIMENT

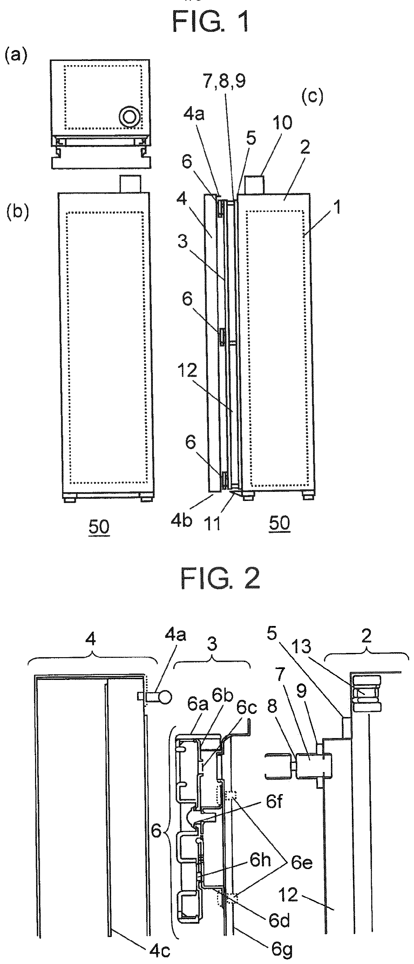

FIGs. 1 through 8 illustrate the configuration of fuel cell system 50 according to the first embodiment of the present invention.

FIG. 1 illustrates the configuration of fuel cell system 50 according to the first embodiment of the present invention. FIG. 1 includes (a) a plan view, (b) a front view, and (c) a side view as seen from the right when facing the front of the system. FIG. 2 illustrates the joint parts between second lid 4, first lid 3, and housing 2, of the same fuel cell system 50.

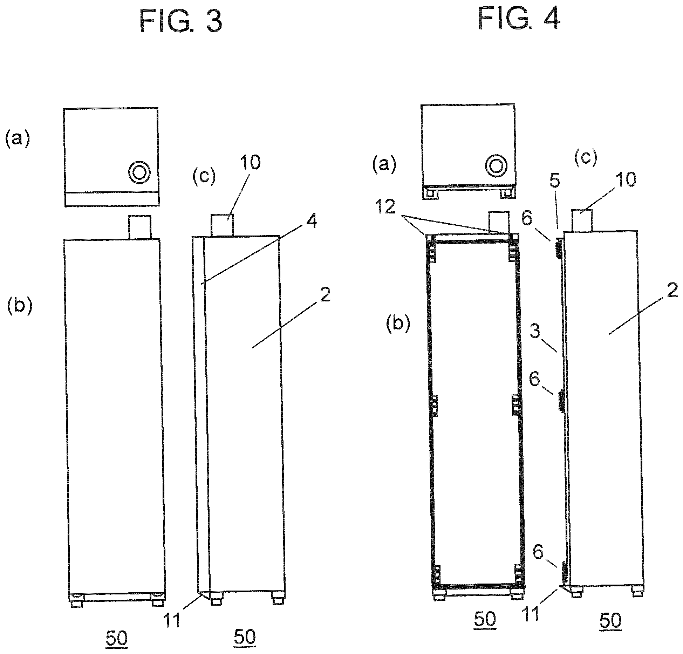

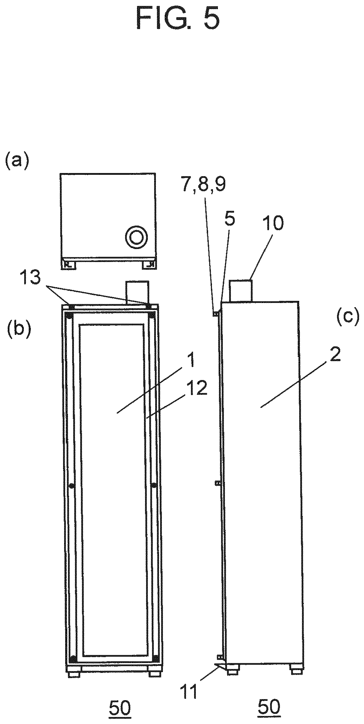

FIG. 3 illustrates assembled appearance of fuel cell system 50 according to the first embodiment of the present invention. FIG. 4 illustrates the configuration of the same fuel cell system 50, with second lid 4 removed. FIG. 5 illustrates the configuration of the same fuel cell system 50, with first lid 3 further removed. Each figure includes (a) a plan view, (b) a front view, and (c) a side view as seen from the right when facing the front of the system.

As shown in FIG. 1, fuel cell system 50 according to the embodiment has power generation unit 1 that generates power using a raw fuel and an oxidizer gas, housing 2 that has opening 12 and contains power generation unit 1, first lid 3 disposed so as to cover opening 12 of housing 2, and second lid 4 disposed so as to cover first lid 3.

Fuel cell system 50 has sealing part 9 disposed between first lid 3 and housing 2, close to housing 2, for providing high airtightness of housing 2. First lid 3 has fixing structure 6 for being fixed to housing 2. As shown in FIG. 2, fixing structure 6 is integrally formed of holding part 6a and holding part 6b having first fitting part 6c.

Fixing structure 6 is rotatably attached to holding part support base 6d with stepped screw 6f. Holding part support base 6d is fixed onto first exterior panel 6g of first lid 3 with fixing screws 6e. Housing 2 is provided thereon with pin 7 having second fitting part 8 for fitting into first fitting part 6c.

The base of pin 7 is provided thereon with sealing part 9 for airtightness. To fix second lid 4 to housing 2, the bottom end of housing 2 is provided thereon with second lid insertion part 11, and the top end of housing 2 is provided thereon with second lid fixing part 13. To fix second lid 4 to housing 2, the top end of second lid 4 is provided thereon with fixing projection 4a, and the bottom end of second lid 4 is provided thereon with inserting projection 4b, and further with second lid detecting part 4c for detaching a normal position of holding part 6a. Note that this embodiment assumes fuel cell system 50 for indoor installation and thus the top end of housing 2 is equipped with inlet and outlet pipe 10.

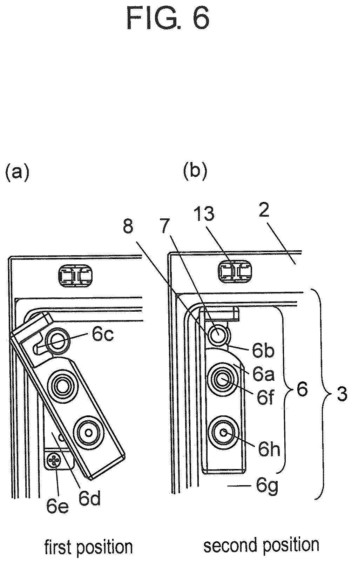

Next, a description is made of operation and effects of fuel cell system 50 according to this embodiment using FIGs. 6 through 8.

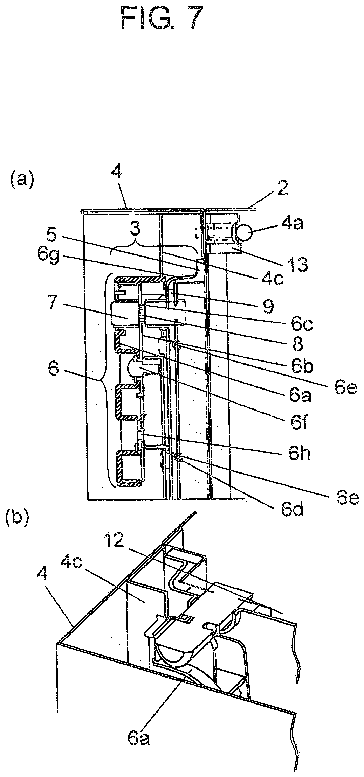

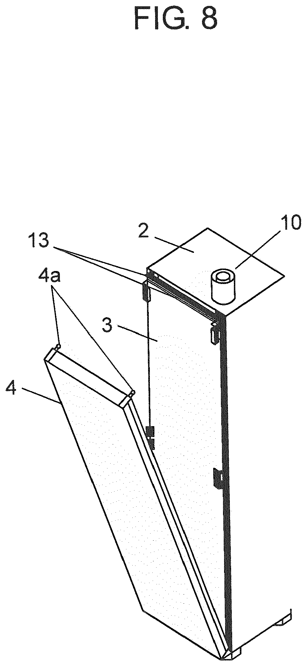

FIG. 6 illustrates how to fix first lid 3 using fixing structure 6, of fuel cell system 50 according to the first embodiment of the present invention. FIG. 6 shows (a) a first position and (b) a second position. FIG. 7 illustrates the same fuel cell system 50, with second lid 4 and first lid 3 fixed to housing 2. FIG. 7 includes (a) a cross section structure viewed from the side and (b) a perspective view partially cut away. FIG. 8 is a perspective view illustrating how to attach second lid 4 of the same fuel cell system 50.

As shown in FIG. 6, a worker holds holding part 6a of fixing structure 6 and rotates fixing structure 6 about stepped screw 6f to make first fitting part 6c and second fitting part 8 fitted together. This causes sealing part 5 attached to housing 2 to be compressed at a roughly constant level. This action seals the inside of housing 2 to provide a roughly constant level of airtightness.

With fixing structure 6 at the first position shown in the left side of FIG. 6, an attempt to place second lid 4 causes second lid detecting part 4c of second lid 4 to contact holding part 6a of fixing structure 6, shown in FIG. 7, which prevents second lid 4 from being attached to housing 2.

Meanwhile, with fixing structure 6 at the second position shown in the right side of FIG. 6, an attempt to place second lid 4 prevents second lid detecting part 4c of second lid 4 from contacting holding part 6a of fixing structure 6, shown in FIG. 7, which allows second lid 4 to be attached to housing 2. In this embodiment, to screw-fix holding part 6b at the second position, holding part rotating fixing part 6h is provided.

Such a configuration prevents a worker from accidentally rotating holding part 6a, thereby providing a safer configuration. To attach second lid 4 to housing 2, inserting projection 4b of second lid 4 is first inserted into second lid insertion part 11 provided at the bottom end of first housing 2, and then as shown in FIG. 8, fixing projection 4a of second lid 4 is inserted into second lid fixing part 13 provided at the top end of housing 2 for fixing.

With the above-described configuration, first lid 3 is attached to housing 2, and first fitting part 6c and second fitting part 8 are made completely fitted together to compress sealing part 5 for airtightness between first lid 3 and housing 2 at a roughly constant level. Further, whether or not work of fitting first fitting part 6c and second fitting part 8 has been surely completed can be checked when second lid 4 is attached, and thus a series of process allows providing high airtightness of housing 2.

### SECOND EXEMPLARY EMBODIMENT

Next, a description is made of the second exemplary embodiment of the present invention. A fuel cell system of this embodiment is different from that of the first embodiment in the configuration of a fixing structure for fixing first lid 3. The different part is described.

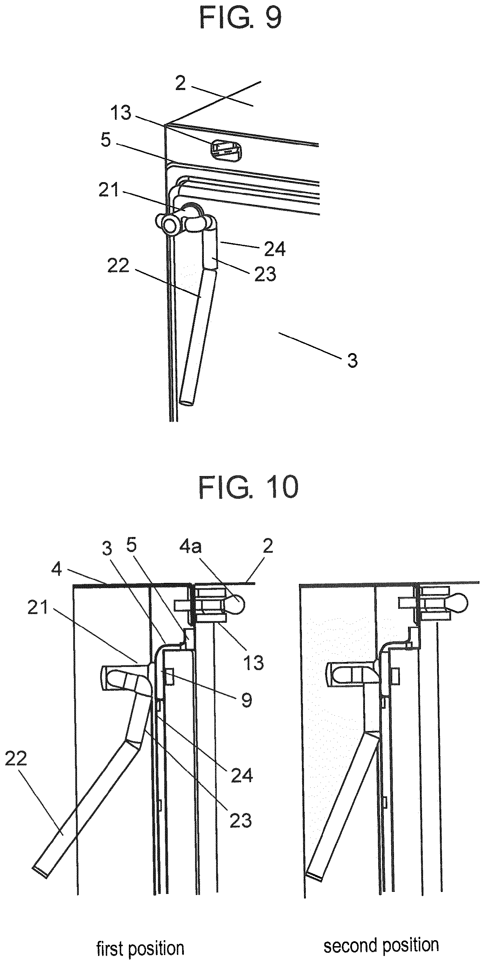

FIGs. 9 and 10 illustrate the configuration of a fuel cell system according to the second embodiment of the present invention.

FIG. 9 is a perspective view of the fixing structure of the fuel cell system according to the second embodiment of the present invention. FIG. 10 illustrates the fuel cell system, with its fixing structure (a) at a first position and (b) at a second position.

As shown in FIG. 9, a worker, in this embodiment, inserts pin 21 disposed on housing 2 into the hole of first lid 3 in alignment. Then, the worker lets the tip of holding part 22 into the hole of pin 21, and rotates holding part 22 about the hole of pin 21 to make first fitting part 23 fit with second fitting part 24 of first lid 3. Even such a configuration compresses sealing part 5 attached to housing 2 at a roughly constant level. As shown in the left side of FIG. 10, holding part 22 at the first position prevents second lid 4 from being completely closed. Meanwhile, as shown in the right side of FIG. 10, holding part 22 at the second position allows second lid 4 to be completely closed.

This allows first lid 3 to be attached to housing 2 easily, and at the same time part of the exterior shell of second lid 4 can be used for detecting the position (i.e., the first or second position) of holding part 22 of first lid 3, thereby simplifying the structure.

### THIRD EXEMPLARY EMBODIMENT

Next, a description is made of the third exemplary embodiment of the present invention. A fuel cell system of this embodiment is different from those of the first and second embodiments in the configuration of a fixing structure for fixing first lid 3. The different part is described.

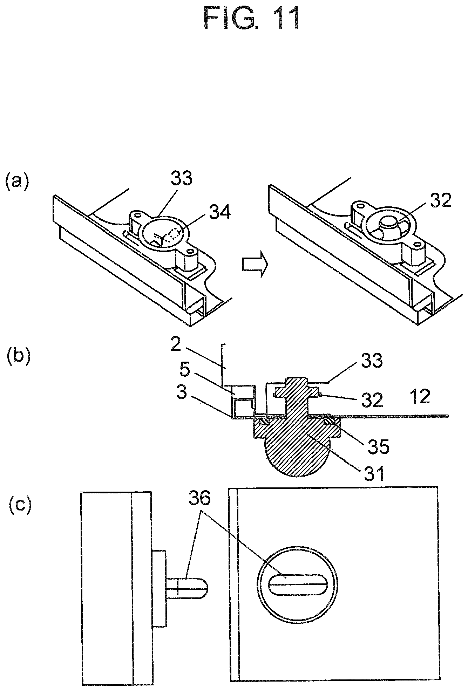

FIGs. 11 and 12 illustrate the configuration of the fuel cell system according to the third exemplary embodiment of the present invention.

FIG. 11 illustrates the configuration of the fixing structure of the fuel cell system according to the third embodiment of the present invention. FIG. 11 includes (a) a perspective view, (b) a sectional view, and (c) side and front views, of the configuration of the fixing structure. FIG. 12 illustrates the configuration of the fixing structure of the fuel cell system according to the third embodiment of the present invention. FIG. 12 illustrates (a) a perspective view at the first position and (b) a perspective view at the second position and a perspective view partially cut away.

As shown in FIG. 11, in this embodiment, housing 2 is provided with receiving part 33 having second fitting part 34. First lid 3 is provided with holding part 31 having first fitting part 32, and sealing part 35 between holding part 31 and first lid 3. Holding part 31 has holding part projecting part 36 (to work as a handle) formed thereon. Holding part projecting part 36 is rotated about the axis of the holding part to make first fitting part 32 fit with second fitting part 34, which compresses sealing part 5 attached to housing 2 at a roughly constant level.

Meanwhile, second lid 4 has second lid recess 37 as shown in FIG. 12. As shown in the left side (a) of FIG. 12, holding part 31 at the first position prevents holding part projecting part 36 from fitting into second lid recess 37, which prevents second lid 4 from being completely closed. Meanwhile, as shown in the right side (b) of FIG. 12, holding part 31 at the second position allows holding part projecting part 36 to fit into second lid recess 37, which allows second lid 4 to be completely closed.

The configuration of this embodiment can provide a small-size, simplified structure of holding part 31 of first lid 3.

As described hereinbefore, a fuel cell system according to an embodiment of the present invention includes power generation unit 1 that generates power using a raw fuel and an oxidizer gas, housing 2 that has opening 12 and contains power generation unit 1, first lid 3 disposed so as to cover opening 12 of housing 2, and second lid 4 disposed so as to cover first lid 3. The fuel cell system also includes sealing part 5 disposed between first lid 3 and housing 2, fixing structure 6 that has holding parts 6a and 6b and first fitting part 6c and is disposed on first lid 3, and second fitting part 8 disposed on housing 2 or on first lid 3. Further, fixing structure 6 is configured so that, when disposing second lid 4, fixing structure 6 is movable between a first position (a part where first fitting part 6c does not fit with second fitting part 8, and holding parts 6a and 6b contact second lid 4) and a second position (a part where first fitting part 6c and second fitting part 8 are fitted together and holding parts 6a and 6b do not contact second lid 4).

With such a configuration, first lid 3 is attached on housing 2, and first fitting part 6c is made completely fitted to compress the sealing part for airtightness between first lid 3 and housing 2 at a roughly constant level. Further, whether or not fitting work of first fitting part 6c has been surely completed can be checked when second lid 4 is attached, and thus a series of process allows providing high airtightness of the housing.

In the above-described embodiment, the description is made using fuel cell system 50 as an example of a power generation system, but the present invention is not limited to the example. For example, power generation unit 1 may be a fuel cell or a gas engine for instance.

Fixing structure 6 may be configured as the following. At the first position, at least part of holding parts 6a and 6b is disposed outside second lid 4 viewed from the front direction of second lid 4 to contact second lid 4. At the second position, holding parts 6a and 6b are contained inside second lid 4 viewed from the thicknesswise direction of second lid 4 not to contact second lid 4.

Resultingly, part of the exterior shell of second lid 4 can be used for detecting the position (i.e., the first or second position) of holding parts 6a and 6b of first lid 3, thereby simplifying the structure.

Fixing structure 6 may be configured as the following. At the first position, holding part 22 moves toward second lid 4 viewed from the direction vertical to the front direction of second lid 4 to contact second lid 4. At the second position, holding part 22 moves toward first lid 3 viewed from the direction vertical to the thicknesswise direction of second lid 4 not to contact second lid 4.

Such a configuration allows first lid 3 to be attached to housing 2 easily, and at the same time part of the exterior shell of second lid 4 can be used for detecting the position (i.e., the first or second position) of holding part 22 of first lid 3, thereby simplifying the structure.

The system may be configured as the following. Holding part 31 has holding part projecting part 36; second lid 4 has second lid recess 37, and in fixing structure 6, at the first position, first fitting part 32 and second fitting part 34 are not fitted together and at the same time holding part projecting part 36 and second lid recess 37 do not contact each other, and at the second position, first fitting part 32 and second fitting part 34 are fitted together and holding part projecting part 36 and second lid recess 37 do not contact each other.

Such a configuration can provide a small-size, simplified fixing structure 6 of first lid 3.

Further, the fixing structure may be configured so that, at the first position, at least part of holding parts 6a and 6b is disposed inside first lid 3 viewed from the front direction of second lid 4.

Such a configuration prevents housing 2, when installed by a wall, from touching the wall.

### INDUSTRIAL APPLICABILITY

As described hereinbefore, the present invention provides an especially great advantage that reliably provides high airtightness of a housing. Hence, the present invention is useful because of being applicable to various types of power generation systems for indoor installation, such as a fuel cell system that generates power through a reaction of hydrogen with oxygen and a power generation system using a gas engine as a power generation unit.

### BRIEF DESCRIPTION OF DRAWINGS

- 1: power generation unit
- 2: housing
- 3: first lid
- 4: second lid
- 4a: fixing projection
- 4b: inserting projection
- 4c: second lid detecting part
- 5: sealing part
- 6: fixing structure
- 6a: holding part
- 6b: holding part
- 6c: first fitting part
- 6d: holding part support base
- 6e: fixing screw
- 6f: stepped screw
- 6g: first exterior panel
- 6h: holding part rotating fixing part
- 7: pin
- 8: second fitting part
- 9: sealing part
- 10: inlet and outlet pipe
- 11: second lid insertion part
- 12: opening
- 13: second lid fixing part
- 21: pin
- 22: holding part
- 23: first fitting part
- 24: second fitting part
- 31: holding part
- 32: first fitting part
- 33: receiving part
- 34: second fitting part
- 35: sealing part
- 36: holding part projecting part
- 37: second lid recess

## Claims

1. A power generation system comprising:
a power generation unit generating power using a raw fuel and an oxidizer gas;
a housing having a pin and an opening and containing the power generation unit;
a first lid disposed so as to cover the opening of the housing and detachably attached to the pin;
a second lid detachably disposed so as to cover the first lid ;
a sealing part disposed between the first lid and the housing;
a fixing structure having a holding part and a first fitting part and displaceably disposed at a front of the first lid; and
a second fitting part formed on the pin so as to be fitted with the first fitting part,
wherein the fixing structure is configured so that, when disposing the second lid, the fixing structure is movable between
a first position at which the first fitting part and the second fitting part are not fitted together, and the holding part and the second lid contact each other, and
a second position at which the first fitting part and the second fitting part are fitted together and the holding part and the second lid do not contact each other, and
wherein the first lid is fixed to the housing with the seal part compressed at a roughly constant level by attaching the first lid to the housing to make the first fitting part fitted with the second fitting part.

2. The power generation system of claim 1,
wherein the fixing structure is configured so that, at the first position, at least part of the holding part contacts the second lid by being disposed outside the second lid viewed from a front direction of the second lid, and at the second position, the holding part does not contact the second lid by being contained inside the second lid viewed from a thicknesswise direction of the second lid.

3. The power generation system of claim 1,
wherein the fixing structure is configured so that, at the first position, the holding part contacts the second lid by moving toward the second lid viewed from a direction vertical to a front direction of the second lid, and at the second position, the holding part does not contact the second lid by moving toward the first lid viewed from a direction vertical to a thicknesswise direction of the second lid.

## Patentansprüche

1. Stromerzeugungssystem, mit:
einer Stromerzeugungseinheit, die Strom unter Anwendung eines Ausgangsbrennstoffes und eines oxidierenden Gases erzeugt;
einem Gehäuse mit einem Stift und einer Öffnung, das die Stromerzeugungseinheit enthält;
einem ersten Deckel, der so angeordnet ist, dass er die Öffnung des Gehäuses abdeckt und abnehmbar an dem Stift angebracht ist;
einem zweiten Deckel, der abnehmbar so angeordnet ist, dass er den ersten Deckel abdeckt;
einem Dichtungsteil, das zwischen dem ersten Deckel und dem Gehäuse angeordnet ist;
einer Befestigungsstruktur, die ein Halteteil und ein erstes Anschlussteil aufweist und verschiebbar an einer Vorderseite des ersten Deckels angeordnet ist; und
einem zweiten Anschlussteil, das an dem Stift so ausgebildet ist, dass es mit dem ersten Anschlussteil zu verbinden ist,
wobei die Befestigungsstruktur so ausgebildet ist, dass, wenn der zweite Deckel angeordnet wird, die Befestigungsstruktur beweglich ist zwischen
einer ersten Position, an der das erste Anschlussteil und das zweite Anschlussteil nicht miteinander verbunden sind und das Halteteil und der zweite Deckel miteinander in Kontakt sind, und
einer zweiten Position, an der das erste Anschlussteil und das zweite Anschlussteil miteinander verbunden sind und das Halteteil und der zweite Deckel nicht miteinander in Kontakt sind, und
wobei der erste Deckel an dem Gehäuse befestigt ist und das Dichtungsteil entsprechend einem näherungsweise konstanten Grad zusammengepresst wird, indem der erste Deckel an dem Gehäuse so angebracht wird, dass das erste Anschlussteil mit dem zweiten Anschlussteil verbunden ist.

2. Stromerzeugungssystem nach Anspruch 1
wobei die Befestigungsstruktur so ausgebildet ist, dass an der ersten Position zumindest ein Teil des Halteteils durch seine Anordnung außerhalb des zweiten Deckels bei Betrachtung von einer Richtung von der Vorderseite des zweiten Deckels mit dem zweiten Deckel in Kontakt tritt, und an der zweiten Position das Halteteil durch seine Beibehaltung innerhalb des zweiten Deckels bei Betrachtung aus einer Richtung der Dicke des zweiten Deckels nicht mit dem zweiten Deckel in Kontakt tritt.

3. Stromerzeugungssystem nach Anspruch 1,
wobei die Befestigungsstruktur so ausgebildet ist, dass an der ersten Position das Halteteil mit dem zweiten Deckel in Kontakt ist, indem es bei Betrachtung aus einer Richtung vertikal zu einer Richtung von der Vorderseite des zweiten Deckels zu dem zweiten Deckel bewegt wird, und an der zweiten Position das Halteteil nicht mit dem zweiten Deckel in Kontakt tritt, indem es bei Betrachtung aus einer Richtung vertikal zu einer Richtung der Dicke des zweiten Deckels zu dem ersten Deckel bewegt wird.

## Revendications

1. Système de production d'énergie comprenant :
une unité de production d'énergie générant de l'énergie en utilisant un combustible brut et un gaz oxydant ;
un logement ayant un axe et une ouverture et contenant l'unité de production d'énergie ;
un premier couvercle disposé afin de recouvrir l'ouverture du logement et d'être fixé de manière détachable à l'axe ;
un second couvercle disposé de manière détachable afin de recouvrir le premier couvercle ;
une pièce de scellement disposée entre le premier couvercle et le logement ;
une structure de fixation ayant une pièce de maintien et une première pièce d'ajustement et disposée de manière à pouvoir être déplacée au niveau d'une partie avant du premier couvercle ; et
une seconde pièce d'ajustement formée sur l'axe afin d'être ajustée à la première pièce d'ajustement,
où la structure de fixation est configurée afin que, lors de la mise en place du second couvercle, la structure de fixation soit mobile entre
une première position à laquelle la première pièce d'ajustement et la seconde pièce d'ajustement ne sont pas ajustées ensemble, et la pièce de maintien et le second couvercle entrent en contact l'un avec l'autre, et
une seconde position à laquelle la première pièce d'ajustement et la seconde pièce d'ajustement sont ajustées ensemble et la pièce de maintien et le second couvercle n'entrent pas en contact l'un avec l'autre, et
où le premier couvercle est fixé au logement avec la pièce d'étanchéité comprimée à un niveau grossièrement constant en fixant le premier couvercle au logement pour ajuster la première pièce d'ajustement à la seconde pièce d'ajustement.

2. Système de production d'énergie selon la revendication 1,
dans lequel la structure de fixation est configurée afin que, à la première position, au moins une partie de la pièce de maintien entre en contact avec le second couvercle en étant disposée à l'extérieur du second couvercle visualisé depuis un sens avant du second couvercle, et à la seconde position, la pièce de maintien n'entre pas en contact avec le second couvercle en étant contenue à l'intérieur du second couvercle visualisé depuis un sens de l'épaisseur du second couvercle.

3. Système de production d'énergie selon la revendication 1,
dans lequel la structure de fixation est configurée de sorte que, à la première position, la pièce de maintien entre en contact avec le second couvercle en se déplaçant vers le second couvercle visualisé depuis un sens vertical vers un sens avant du second couvercle, et à la seconde position, la pièce de maintien n'entre pas en contact avec le second couvercle en se déplaçant vers le premier couvercle visualisé depuis un sens vertical par rapport à un sens de l'épaisseur du second couvercle.
